# EUROPÄISCHE PATENTSCHRIFT

(11) **EP 2 019 933 B1**
(45) Veröffentlichungstag und Bekanntmachung des Hinweises auf die Patenterteilung: **21.10.2009**
(21) Anmeldenummer: 07728479.2
(22) Anmeldetag: 25.04.2007
(51) Int. Cl.: F16D 48/06

(54) **KUPPLUNGSSTELLER UND VERFAHREN ZUR BETÄTIGUNG EINER KUPPLUNG**
CLUTCH ACTUATOR AND METHOD FOR ACTUATING A CLUTCH
DISPOSITIF DE REGLAGE D'EMBRAYAGE ET PROCEDE POUR ACTIONNER UN EMBRAYAGE

(30) Priorität: 23.05.2006 DE 102006024010
(43) Veröffentlichungstag der Anmeldung: 04.02.2009
(73) Patentinhaber: ZF Friedrichshafen AG, 88038 Friedrichshafen (DE)
(72) Erfinder: PETZOLD, Rainer, 88045 Friedrichshafen (DE); BITZER, Franz, 88048 Friedrichshafen (DE)
(86) Internationale Anmeldenummer: PCT/EP2007/054023
(87) Internationale Veröffentlichungsnummer: WO 2007/134938

(56) Entgegenhaltungen:
- EP-A1- 1 367 283
- WO-A-03/019026
- FR-A- 2 828 535

## Beschreibung

Die Erfindung befrifft ein Verfahren zur Steuerung eines Kupplungsstellers gemäß dem Oberbegriff des Patentanspruchs 1.

Das Öffnen bzw. Ausrücken einer in einem Antriebsstrang angeordneten Kupplung kann mittels eines an einer Kupplungsglocke angeordneten Kupplungsstellers durchgeführt werden, wobei der Kupplungssteller elektrisch, pneumatisch oder hydraulisch arbeitet und zur Axialverschiebung eines Ausrücklagers dient. Ein solcher pneumatisch betriebener Kupplungssteller ist beispielsweise aus der DE 100 05 086 A1 der Anmelderin bekannt.

Bei hydraulischen oder pneumatischen Kupplungsstellern umfasst der Kupplungssteller im Wesentlichen ein Zylindergehäuse, einen Kolben mit einer Abdichtung, eine Vorlastfeder und gegebenenfalls eine Entlüftungsschraube. Die Vorlastfeder sorgt dafür, dass bei entlüftetem bzw. drucklosem Kupplungssteller am Ausrücklager immer eine geringe Ausrückkraft anliegt. Hierdurch kann ein Schmierfilmabriss im Ausrücklager verhindert, die Lebensdauer des Ausrücklagers erhöht und störende Geräusche vermieden werden.

Die Verwendung einer derartigen Vorlastfeder bzw. Vorspannfeder ist mit dem Nachteil verbunden, dass deren Federkraft in Abhängigkeit vom Ausrückweg variiert. Damit ändert sich aber die Vorspannkraft in Abhängigkeit vom Verschleißzustand der Kupplungsbeläge, welches über die Lebensdauer der Kupplung betrachtet ein nicht konstantes und damit unerwünschtes Systemverhalten verursacht.

Ein weiterer Nachteil bei der Verwendung einer Vorspannfeder bei Kupplungsstellern ist, dass eine oftmals gewünschte und eingestellte stärkere Vorspannkraft bei geschlossener Kupplung zu Mikrobewegungen im Kupplungssteller selbst führt. Dies ist darauf zurückzuführen, dass im eingekuppelten Zustand, bei dem der Kupplungssteller drucklos ist, mit einer erhöhten Vorspannkraft Schwingungen des Motors in den Kupplungsausrückzylinder übertragen werden. Dies führt dann im Kupplungssteller zu feinsten bewegengen, die oben genannten Mikrobewegungen, die wiederum zum vorzeitigen Verschleiß des Kupplungsstellers führen.

Gleichwohl können Mikrobewegungen im Kupplungsausrücksystem durchaus sinnvoll sein, um nämlich Reibungseinflüsse der Ausrückmechanik auf die Kupplungsregelung zu minimieren. Im eingekuppelten Zustand sind solche Mikrobewegungen jedoch nicht erforderlich und eher schädlich.

Vor diesem Hintergrund liegt der Erfindung die Aufgabe zugrunde, ein Verfahren zur Steuerung eines Kupplungsstellers der eingangs geschilderten Art dahin gehend zu verbessern, dass dieser die geschilderten Nachteile überwindet und zudem aus möglichst wenigen Einzelteilen besteht.

Die Lösung dieser Aufgabe ergibt sich aus den Merkmalen des Hauptanspruchs, während vorteilhafte Ausgestaltungen und Weiterbildungen der Erfindung den Unteransprüchen entnehmbar sind.

Der Erfindung liegt die Erkenntnis zugrunde, dass sich die gestellte Aufgabe auf überraschend einfache Art und Weise dadurch lösen lässt, dass auf eine Vorspannfeder gänzlich verzichtet und die notwendige Vorspannkraft durch das Betriebsmedium des Kupplungsstellers erzeugt wird.

Da die Vorspannkraft nicht, wie bislang üblich, durch eine Feder aufgebracht wird, lässt sich die Vorspannkraft variabel einstellen. Ferner hängt die Vorspannkraft nicht mehr vom Verschleißzustand der Kupplungsbeläge ab. Ferner entfallen die Kosten für den Einbau und für einen gegebenenfalls notwendigen Austausch der Vorspannfeder.

Schließlich lassen sich nun gezielt Mikrobewegungen im Kupplungssteller auf ein Minimum reduzieren bzw. es ist nunmehr möglich, Mikrobewegungen in bestimmten Betriebsphasen des Antriebsstrangs gezielt und bedarfsgerecht im Ausrücksystem zu erzeugen. Hierdurch können Reibungseinflüsse in der Ausrückmechanik reduziert und die Regelgüte bei einer Kupplungsbetätigung erhöht werden. Letztlich lassen sich durch die erfindungsgemäße Ausgestaltung eines Kupplungsstellers gegenüber herkömmlichen Lösungen reduzierte Vorspannkräfte einstellen, so dass im eingekuppelten Zustand Mikrobewegungen nicht bis in den Kupplungssteller wirken.

Die Erfindung betrifft ein Verfahren zur Steuerung eines Kupplungsstellers mit einem Zylinder, einem Kolben und einem Stellglied zur Betätigung einer Kupplung zwischen einem Antriebsmotor und einem Getriebe eines Kraftfahrzeugs, bei welchem ein zur Mittelachse der Kupplung koaxiales Ausrücklager durch das Stellglied betätigt wird, bei dem das Ausrücklager mit einer Vorspannkraft beaufschlagt wird, und bei dem in den Kupplungssteller zum axialen Verschieben des Kolbens bzw. des Ausrücklagers ein Betriebsmedium eingespeist wird und der Kupplungssteller zur Erzeugung der Vorspannkraft verwendet wird. Dokument EP 1 367 283 zeigt ein Verfahren das die genannten Verfahrenschritte enthält.

Erfindungsgemäß with die Vorspannkraft durch den Kupplungssteller so geregelt dass bei geöffneter Kupplung Mikrobewegungen in der Ausrückmechanik erzeugt werden.

In diesem Zusammenhang ist es vorteilhaft, wenn das Betriebsmedium zur Erzeugung der Vorspannkraft aus einem Speicher über eine Verbindungsleitung in den Kupplungssteller eingespeist wird.

Alternativ dazu kann vorgesehen sein, dass das Betriebsmedium zur Erzeugung der Vorspannkraft über eine Zusatzleitung aus dem Speicher in den Kupplungssteller eingespeist wird, so dass auch eine beidseitige Beaufschlagung des Kolbens des Kupplungsstellers möglich ist.

Eine andere Weiterbildung des Verfahrens sieht vor, dass eine elektronische Steuereinrichtung das Einspeisen des Betriebsmediums in den Kupplungssteller in Abhängigkeit vom betriebssituationsabhängigen Maß der nötigen Vorspannkraft und/oder in Abhängigkeit vom benötigten Betätigungsdruck zum Betätigen des Ausrücklagers bzw. der Kupplung regelt.

In diesem Zusammenhang ist es vorteilhaft, wenn die elektronische Steuereinrichtung die Regelung der Vorspannkraft auf der Grundlage von IST-Größen der Ausrücklagerbetätigung mittels wenigstens eines Sensors regelt, welcher der Steuereinrichtung diesbezügliche Sensorsignale liefert. Als Sensor wird dabei ein Kraftmesssensor oder ein Wegmesssensor verwendet.

Ferner liegt es im Rahmen zweckmäßiger Weiterbildungen des Verfahrens, wenn als Betriebsmedium Luft oder Hydraulikfluid verwendet wird.

Zur Verdeutlichung der Erfindung ist der Beschreibung eine Zeichnung eines Ausführungsbeispiels beigefügt. Diese zeigt eine schematische Darstellung eines Getriebes 1 mit einem Ausführungsbeispiel eines erfindungsgemäßen Verfahrens zur Steuerung eines Kupplungsstellers 6 für ein hier nicht dargestelltes Fahrzeug.

Dabei ist auf einer Eingangswelle 2 des Getriebes 1 eine Kupplung 3 angeordnet, die von einem auf der Eingangswelle 2 sitzenden Ausrücklager 4 in einen geöffneten und einen geschlossenen Zustand mit der Schwungscheibe einer hier nicht gezeigten Antriebsmaschine des Fahrzeugs gebracht werden kann. An das Ausrücklager 4 greift ein Hebel 5 an, der von dem Kupplungssteller 6 betätigt wird. An dem Kupplungssteller 6 ist eine Verbindungsleitung 7 befestigt, die den Kupplungssteller 6 mit einem Speicher 8 für ein Betriebsmedium des Kupplungsstellers verbindet. Eine elektrische Verbindungsleitung 9 schließt den Kupplungssteller 6 an eine elektronische Steuereinrichtung 10 an. Diese Steuereinrichtung 10 kann auch der Leitrechner des Fahrzeugs oder die Getriebesteuerung sein.

Im Getriebe 1 ist eine mit einem Druckmittel arbeitende Getriebesteuerung 11 angeordnet, die über eine Leitung 12 ebenfalls mit dem Speicher 8 für das Betriebsmedium bzw. Druckmittel verbunden und die über eine elektrische Leitung 13 an die Steuereinrichtung 10 angeschlossen ist.

Der Hebel 5 stellt zusammen mit einem im Kupplungssteller 6 verschiebbar gelagerten Kolben 14 ein Stellglied 15 dar, mit welchem das Ausrücklager 4 zwecks Schaltung der Kupplung 3 axial verschoben werden kann. Am Stellglied 15 liegt eine Vorspannkraft in Ausrückrichtung an, die permanent auf das Ausrücklager 4 übertragen wird.

Diese Vorspannkraft wird nicht durch eine Vorspannfeder sondern durch ein Betriebsmedium erzeugt, welches aus dem Speicher 8 über die Verbindungsleitung 7 in den Kupplungssteller 6 eingespeist wird. Das Betriebsmedium kann aber auch über eine angedeutete Zusatzleitung 16 in den Kupplungssteller 6 geführt werden.

Die Steuereinrichtung 10 bewirkt unter anderem das Einspeisen des Betriebsmediums in den Kupplungssteller 6, und zwar in Abhängigkeit vom Maß der nötigen Vorspannkraft sowie in Abhängigkeit vom benötigten Betätigungsdruck bei einer Betätigung des Ausrücklagers 4. Hierzu steht das Ausrücklager 4 und/oder das Stellglied 15 mit einem Sensor 17 sensorisch in Verbindung, welcher beispielsweise als Wegmesssensor oder als Kraftmesssensor ausgebildet ist. Die von dem Sensor 17 ermittelten Informationen werden über eine Sensorleitung 18 der Steuereinrichtung 10 zur Erzeugung und Weiterleitung von Steuerungssignalen für den Kupplungssteller 6 zugeführt, der betriebssituationsabhängig auch die gewünschte Vorspannkraft am Ausrücklager 4 einstellt.

In dem zeichnerisch dargestellten Ausführungsbeispiel ist der Kupplungssteller 6 exzentrisch zur Eingangswelle 2, welche die Mittelachse der Kupplung 3 bildet, am Getriebe 1 angeordnet. Abweichend vom gezeigten Ausführungsbeispiel ist es aber auch möglich, bei entsprechender baulicher Anpassung den Kupplungssteller 6 konzentrisch um die Eingangswelle 2 anzuordnen. Derartige Kupplungssteller 6 sind als so genannte Zentralausrücker hinsichtlich ihrer Grundfunktion an sich bekannt.

Die Steuerung der Zuleitung des Betriebsmediums, beispielsweise von Luft, zum Kupplungssteller 6 erfolgt in Abhängigkeit eines Kupplungsbetätigungsvorgangs wie folgt:

Im eingekuppelten Zustand des Ausrücklagers 4 liegt eine nur geringe Vorspannkraft am Kolben 14 und dem damit verbundenen Stellglied 15 an. Hierzu wird entweder eine geringe Menge an Betriebsmedium über die Verbindungsleitung 7 in den Kupplungssteller 6 eingespeist, oder die entsprechende Menge Betriebsmedium wird über eine gesonderte Zusatzleitung 16 in den Kupplungssteller 6 geleitet, der ansonsten entlüftet ist, also bis auf die geringe Menge Betriebsmedium zur Einstellung der Vorspannung des Ausrücklagers 4 drucklos ist. Im Bedartsfalle wird diese Menge an Betriebsmedium durch die Steuereinrichtung 10 in Kenntnis der Messwerte des Sensor 17 erhöht oder verringert, um beispielsweise Mikrobewegungen im Ausrücklager 4 zu erzeugen.

Wenn das Ausrücklager 4 durch das Stellglied 15 zum Ausrücken der Kupplung 3 axial verschoben werden soll, wird der Kupplungssteller 6 mit einer diesbezüglichen Menge an Betriebsmedium versorgt, so dass dieser eine dementsprechende Betätigungskraft aufbauen und halten kann. Dabei wird die nun benötigte Menge an Betriebsmedium dem bereits im Kupplungssteller 6 enthaltenen Betriebsmedium gegebenenfalls hinzuaddiert.

### Bezugszeichen

- 1: Getriebe
- 2: Eingangswelle
- 3: Kupplung
- 4: Ausrücklager
- 5: Hebel
- 6: Kupplungssteller
- 7: Verbindungsleitung
- 8: Speicher
- 9: Verbindungsleitung
- 10: Steuereinrichtung
- 11: Getriebesteuerung
- 12: Leitung
- 13: Leitung
- 14: Kolben
- 15: Stellglied
- 16: Zusatzleitung
- 17: Sensor
- 18: Sensorleitung

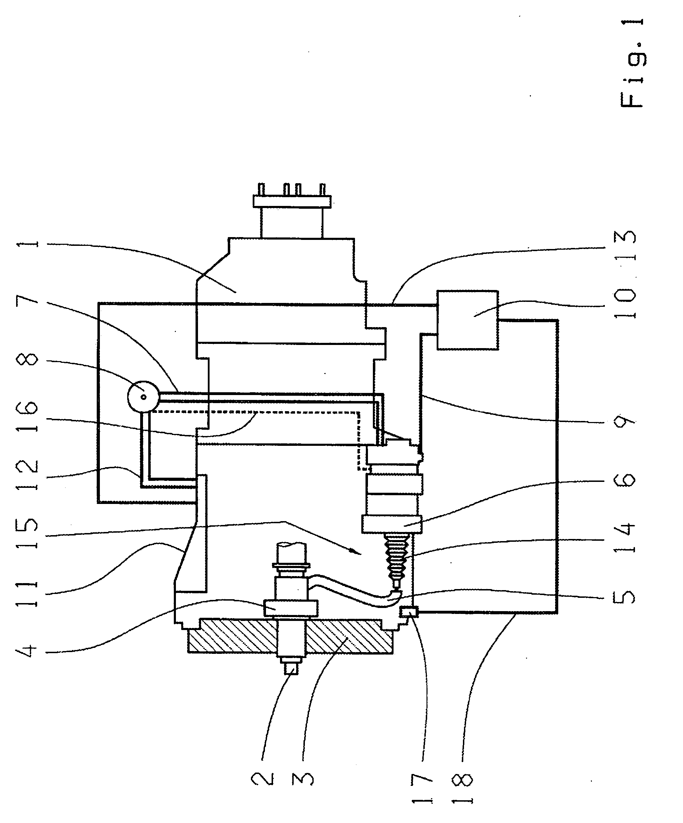

## Patentansprüche

1. Verfahren zur Steuerung eines Kupplungsstellers (6) mit einem Zylinder, einem Kolben (14) und einem Stellglied (15) zur Betätigung einer Kupplung (3) zwischen einem Antriebsmotor und einem Getriebe (1) eines Kraftfahrzeugs, bei welchem ein zur Mittelachse der Kupplung (3) koaxiales Ausrücklager (4) durch das Stellglied (15) betätigt wird, bei dem das Ausrücklager (4) mit einer Vorspannkraft beaufschlagt wird, und bei dem in den Kupplungssteller (6) zum axialen Verschieben des Kolbens (14) bzw. des Ausrücklagers (4) ein Betriebsmedium eingespeist wird und der Kupplungssteller (6) zur Erzeugung der Vorspannkraft verwendet wird, **dadurch gekennzeichnet, dass** die Vorspannkraft durch den Kupplungssteller (6) so geregelt wird, dass bei geöffneter Kupplung (3) Mikrobewegungen in der Ausrückmechanik erzeugt werden.

2. Verfahren nach Anspruch 1, **dadurch gekennzeichnet, dass** Betriebsmedium zur Erzeugung der Vorspannkraft aus einem Speicher (8) über eine Verbindungsleitung (7) in den Kupplungssteller (6) eingespeist wird.

3. Verfahren nach Anspruch 2, **dadurch gekennzeichnet, dass** Betriebsmedium zur Erzeugung der Vorspannkraft über eine Zusatzleitung (16) aus dem Speicher (8) in den Kupplungssteller (6) eingespeist wird.

4. Verfahren zumindest nach Anspruch 1, **dadurch gekennzeichnet, dass** eine elektronische Steuereinrichtung (10) das Einspeisen des Betriebsmediums in den Kupplungssteller (6) in Abhängigkeit vom betriebssituationsabhängigen Maß der nötigen Vorspannkraft und/oder in Abhängigkeit vom benötigten Betätigungsdruck zum Betätigen des Ausrücklagers (4) bzw. der Kupplung (3) regelt.

5. Verfahren zumindest nach Anspruch 4, **dadurch gekennzeichnet, dass** die elektronische Steuereinrichtung (10) die Regelung der Vorspannkraft auf der Grundlage von IST-Größen der Ausrücklagerbetätigung mittels wenigstens eines Sensors (17) regelt, welcher der Steuereinrichtung (10) Sensorsignale liefert.

6. Verfahren nach Anspruch 5, **dadurch gekennzeichnet, dass** ein Kraftmesssensor (17) oder ein Wegmesssensor (17) verwendet wird.

7. Verfahren zumindest nach Anspruch 1, **dadurch gekennzeichnet, dass** als Betriebsmedium Luft oder Hydraulikfluid verwendet wird.

## Claims

1. Method for controlling a clutch actuator (6) having a cylinder, a piston (14) and an actuator element (15) for actuating a clutch (3) between a drive engine and a gearbox (1) of a motor vehicle, in which method a disengagement bearing (4), coaxial to the central axis of the clutch (3), is actuated by the actuator element (15), in which method a prestressing force is applied to the disengagement bearing (4), and in which method an operating medium is fed into the clutch actuator (6) in order to move the clutch (14) and/or the disengagement bearing (4) axially, and the clutch actuator (6) is used to generate the prestressing force, **characterized in that** the prestressing force is regulated by the clutch actuator (6) in such a way that when the clutch (3) is opened micromovements are generated in the disengagement mechanism.

2. Method according to Claim 1, **characterized in that** operating medium for generating the prestressing force is fed into the clutch actuator (6) from an accumulator (8) via a connecting line (7).

3. Method according to Claim 2, **characterized in that** operating medium for generating the prestressing force is fed into the clutch actuator (6) from the accumulator (8) via an additional line (16).

4. Method at least according to Claim 1, **characterized in that** an electronic control device (10) regulates the feeding of the operating medium into the clutch actuator (6) as a function of the operating-situation-dependent amount of necessary prestressing force and/or as a function of the required actuation pressure for actuating the disengagement bearing (4) and/or the clutch (3).

5. Method at least according to Claim 4, **characterized in that** the electronic control device (10) regulates the control of the prestressing force on the basis of ACTUAL variables of the disengagement bearing actuation by means of at least one sensor (17) which supplies sensor signals to the control device (10).

6. Method according to Claim 5, **characterized in that** a force-measuring sensor (17) or a travel-measuring sensor (17) is used.

7. Method at least according to Claim 1, **characterized in that** air or hydraulic fluid is used as the operating medium.

## Revendications

1. Procédé de commande d'un actionneur d'embrayage (6) qui présente un cylindre, un piston (14) et un organe d'actionnement (15) qui actionne un embrayage (3) disposé entre le moteur d'entraînement et la transmission (1) d'un véhicule automobile, dans lequel
une butée de débrayage (4) coaxiale par rapport à l'axe central de l'embrayage (3) est actionnée par l'organe d'actionnement (15),
une force de précontrainte est appliquée sur la butée de débrayage (4) et
un fluide d'actionnement est conservé dans l'actionneur d'embrayage (6) pour déplacer axialement le piston (14) ou la butée de débrayage (4), l'actionneur d'embrayage (6) étant utilisé pour appliquer la force de précontrainte,
**caractérisé en ce que**
la force de précontrainte est régulée par l'actionneur d'embrayage (6) de telle sorte que lorsque l'embrayage (3) est ouvert, des micro-déplacements sont produits dans le mécanisme de débrayage.

2. Procédé selon la revendication 1, **caractérisé en ce que** pour appliquer la force de précontrainte, le fluide d'actionnement provenant d'un réservoir (8) est injecté dans l'actionneur d'embrayage (6) par l'intermédiaire d'un conduit de raccordement (7).

3. Procédé selon la revendication 2, **caractérisé en ce que** pour appliquer la force de précontrainte, le fluide d'actionnement provenant du réservoir (8) est injecté dans l'actionneur d'embrayage (6) par l'intermédiaire d'un conduit supplémentaire (16).

4. Procédé selon au moins la revendication 1, **caractérisé en ce qu'**un système électronique de commande (10) régule l'injection du fluide d'actionnement dans l'actionneur d'embrayage (6) en fonction du niveau de la force de précontrainte nécessaire, qui dépend de la situation de conduite, et/ou en fonction de la pression d'actionnement nécessaire pour actionner la butée de débrayage (4) ou l'embrayage (3).

5. Procédé selon au moins la revendication 4, **caractérisé en ce que** le système électronique de commande (10) contrôle la régulation de la force de précontrainte sur base de grandeurs effectives IST de l'actionnement de la butée de débrayage au moyen d'au moins un détecteur (17) qui délivre des signaux de détection au système de commande (10).

6. Procédé selon la revendication 5, **caractérisé en ce qu'**il utilise un détecteur (17) de mesure de force ou un détecteur (17) de mesure de déplacement.

7. Procédé selon au moins la revendication 1, **caractérisé en ce que** comme fluide d'actionnement, il utilise l'air ou un fluide hydraulique.
